# EUROPÄISCHE PATENTSCHRIFT

(11) **EP 2 605 932 B1**
(45) Veröffentlichungstag und Bekanntmachung des Hinweises auf die Patenterteilung: **04.10.2017**
(21) Anmeldenummer: 11749083.9
(22) Anmeldetag: 29.07.2011
(51) Int. Cl.: B60R 5/04, B60N 2/36, B60N 2/225, B60N 2/20, B60N 2/235, B60N 2/22, B60R 5/00

(54) **FAHRZEUGSITZ MIT MEHREREN BESCHLÄGEN**
VEHICLE SEAT HAVING A PLURALITY OF FITTINGS
SIÈGE DE VÉHICULE AUTOMOBILE COMPRENANT PLUSIEURS FERRURES

(30) Priorität: 16.08.2010 DE 102010039361
(43) Veröffentlichungstag der Anmeldung: 26.06.2013
(73) Patentinhaber: Brose Fahrzeugteile GmbH & Co. Kommanditgesellschaft, Coburg, Max-Brose-Straße 1 96450 Coburg (DE)
(72) Erfinder: PRAUSE, Markus, 96450 Coburg (DE); LANGGUTH, Andi, 96450 Coburg (DE)
(74) Vertreter: Maikowski & Ninnemann Patentanwälte Partnerschaft mbB
(86) Internationale Anmeldenummer: PCT/EP2011/003818
(87) Internationale Veröffentlichungsnummer: WO 2012/022425

(56) Entgegenhaltungen:
- EP-A1- 2 210 773
- DE-A1- 10 311 869
- DE-A1-102004 013 271
- US-A- 5 775 780

## Beschreibung

Die Erfindung betrifft einen Fahrzeugsitz nach dem Oberbegriff des Anspruchs 1.

Ein derartiger Fahrzeugsitz weist ein Sitzteil, ein Rückenlehnenteil, das um eine Schwenkachse schwenkbar mit dem Sitzteil verbunden ist, einen ersten Beschlag, der entlang der Schwenkachse gesehen an einer ersten Position am Sitzteil angeordnet ist und einen zweiten Beschlag, der in Richtung der Schwenkachse gesehen an einer zweiten Position am Sitzteil angeordnet ist, auf. Die beiden Beschläge dienen zur schwenkbaren Verbindung des Rückenlehnenteils mit dem Sitzteil und können beispielsweise als Drehbeschläge zur drehbaren Verbindung oder als Rastbeschläge zum rastenden Verbinden des Sitzteils mit dem Rückenlehnenteil ausgebildet sein.

Eine Bauform eines Drehbeschlags, der zur Verbindung des Sitzteils mit dem Rückenlehnenteil eingesetzt werden kann, ist beispielsweise aus der DE 10 2008 028 102 A1 bekannt.

Eine mögliche Bauform eines Rastbeschlags ergibt sich beispielsweise aus der DE 10 2008 047 660 A1.

Bei herkömmlichen Fahrzeugsitzen, beispielsweise einem vorderen Fahrzeugsitz, sind an unterschiedlichen Seiten eines Sitzteils, gesehen entlang der Schwenkachse zwischen Sitzteil und Rückenlehnenteil, jeweils ein Beschlag angeordnet. So ist ein Beschlag in der Regel an einer Türseite des Fahrzeugsitzes und ein weiterer Beschlag an der gegenüberliegenden, so genannten Tunnelseite, die hin zur Fahrzeugmitte gelegen ist, angeordnet. Die Beschläge dienen zum Verstellen des Rückenlehnenteils relativ zum Sitzteil, wobei ein Drehbeschlag durch kontinuierliches Verdrehen das Rückenlehnenteil relativ zum Sitzteil verschwenkt, während ein Rastbeschlag in einem verrasteten Zustand das Rückenlehnenteil in Position relativ zum Sitzteil hält und zum Verschwenken des Rückenlehnenteils relativ zum Sitzteil entriegelt werden kann.

Bei Rücksitzen, beispielsweise Rücksitzbänken, können grundlegend ähnliche Anordnungen zum Einsatz kommen, wobei beidseits eines Sitzteils der Rücksitzbank jeweils ein Beschlag angeordnet ist, die ein Rückenlehnenteil mit dem Sitzteil koppeln.

Bei einem aus der DE 10 2006 015 558 B3 bekannten Fahrzeugsitz sind an einer Seite eines Sitzteils ein Rastbeschlag und ein Drehbeschlag in Serie geschaltet, so dass durch Betätigung des Drehbeschlags ein Rückenlehnenteil in kontinuierlicher Weise relativ zum Sitzteil verschwenkt und die Neigung des Rückenlehnenteils eingestellt werden kann, wohingegen durch Betätigung des Rastbeschlags ein Freischwenken des Rückenlehnenteils ermöglicht wird.

Bei einem aus der US 7,695,068 B2 bekannten Fahrzeugsitz sind an einer Seite eines Sitzteils, an der durch Anbindung eines Sicherheitsgurtes große Belastungskräfte eingeleitet werden und aufgenommen werden müssen, zwei Beschläge in Form von Drehbeschlägen angeordnet. Die Dopplung der Beschläge an einer Seite des Sitzteils dient dazu, an dieser Seite auftretende Kräfte besser auffangen zu können.

Die US 5,775,780 offenbart einen Fahrzeugsitz, bei dem ein Rückenlehnenteil über vier Anbindungspunkte mit Rahmenteilen eines Sitzteils verbunden ist. An einem dieser Anbindungspunkte ist dabei ein Beschlag mit einem Motor vorgesehen, der eine Welle antreibt.

Die EP 2 210 773 B1 offenbart einen Fahrzeugsitz, bei dem ein Rückenlehnenteil über zwei Beschläge mit einem Sitzteil verbunden ist. An einem dritten Anbindungspunkt ist ein Gelenk vorgesehen, jedoch kein Beschlag im Sinne der vorliegenden Anmeldung.

Die DE 103 11 869 A1 offenbart einen Fahrzeugsitz, bei dem ein Rückenlehnenteil über drei Gelenke mit einem Sitzteil verbunden ist. An einem Rahmenteil ist hierbei ein Elektromotor vorgesehen, über den ein Verschwenken des Rückenlehnenteils relativ zum Sitzteil bewirkt werden kann.

Die DE 10 2004 013 271 A1 offenbart schließlich einen Fahrzeugsitz, bei dem eine Verbindung des Rückenlehnenteils mit dem Sitzteil über zwei Beschläge erfolgt.

Aufgabe der vorliegenden Erfindung ist es, einen Fahrzeugsitz zur Verfügung zu stellen, der eine vorteilhafte Krafteinleitung von einem Rückenlehnenteil in ein Sitzteil und eine hinreichende Festigkeit zur Aufnahme von auch großen Belastungen bei möglichst einfacher Bauform der verwendeten Beschläge ermöglicht.

Diese Aufgabe wird gelöst durch einen Gegenstand mit den Merkmalen des Anspruchs 1.

Demnach weist ein Fahrzeugsitz einen dritten Beschlag auf, der entlang der Schwenkachse gesehen zwischen dem ersten Beschlag und dem zweiten Beschlag angeordnet und zu dem ersten Beschlag und zu dem zweiten Beschlag entlang der Schwenkachse beabstandet ist.

Gedanke der vorliegenden Erfindung ist es, einen oder mehrere zusätzliche Beschläge zur Verbindung eines Rückenlehnenteils mit einem Sitzteil eines Fahrzeugsitzes zu verwenden, wobei die zusätzlichen Beschläge zwischen den herkömmlich vorgesehenen Beschlägen, die beispielsweise entlang der Schwenkachse gesehen an einer ersten Seite des Sitzteils und an einer gegenüberliegenden zweiten Seite des Sitzteils montiert sind, beabstandet zu diesen herkömmlichen Beschlägen angeordnet sind, so dass zwischen den äußeren Beschlägen eine weitere Abstützung des Rückenlehnenteils relativ zum Sitzteil geschaffen wird.

Es ist ein dritter Beschlag vorgesehen sein. Denkbar ist zwei oder mehr zusätzliche Beschläge, beispielsweise drei oder vier zusätzliche Beschläge einzusetzen, um entlang der Schwenkachse eine vielfache Abstützung des Rückenlehnenteils relativ zum Sitzteil zu schaffen und eine gleichmäßige, vorteilhafte Krafteinleitung vom Rückenlehnenteil in das Sitzteil zu erreichen.

Der erste Beschlag und der zweite Beschlag sind jeweils mit einem Rahmenteil des Sitzteils und einem Rahmenteil des Rückenlehnenteils verbunden, wobei die Rahmenteile als Bestandteil der Rahmenstruktur des Fahrzeugsitzes, aber auch als Adapterteile zur angepassten Anbringung der Beschläge an dem Rahmen eines Fahrzeugsitzes ausgebildet sein können. Der dritte Beschlag ist mit einem Rahmenteil des Sitzteils und einem Rahmenteil des Rückenlehnenteils verbunden, wobei sich diese Rahmenteile zur Anbindung des dritten Beschlags von den Rahmenteilen, mit denen der erste Beschlag und der zweite Beschlag verbunden sind, unterscheiden. Der erste Beschlag ist somit mit einem ersten Rahmenteil des Sitzteils und einem ersten Rahmenteil des Rückenlehnenteils, der zweite Beschlag mit einem zweiten Rahmenteil des Sitzteils und einem zweiten Rahmenteil des Rückenlehnenteils und der dritte Beschlag mit einem dritten Rahmenteil des Sitzteils und einem dritten Rahmenteil des Rückenlehnenteils verbunden, wobei die Rahmenteile jeweils unterschiedlich voneinander sind, so dass der dritte Beschlag an unterschiedlicher Stelle beabstandet von den anderen beiden Beschlägen mit dem Sitzteil und dem Rückenlehnenteil verbunden ist.

Bevorzugt kann der dritte Beschlag an einer Position eines Gurtanbindungspunktes am Sitzteil angeordnet sein. Dies ist insbesondere vorteilhaft bei Ausbildung des Fahrzeugsitzes als Fahrzeugrücksitz oder Fahrzeugrücksitzbank, bei der entlang der

Bank mehrere Gurtanbindungspunkte vorgesehen sein können. Über den zusätzlichen, dritten Beschlag kann dann eine zusätzliche Abstützung des Rückenlehnenteils relativ zum Sitzteil dort geschaffen werden, wo aufgrund der wirkenden Gurtkräfte besonders große Belastungskräfte abgestützt und aufgefangen werden müssen.

Beispielsweise können der erste Beschlag und der zweite Beschlag um eine Wegstrecke entlang der Schwenkachse voneinander beabstandet sein, wobei der dritte Beschlag um das 0,2- bis 0,8-fache, bevorzugt um das 0,35- bis 0,65-fache der Wegstrecke von dem ersten Beschlag beabstandet ist.

Beispielsweise kann der dritte Beschlag um das 0,6-fache der Wegstrecke von dem ersten Beschlag beabstandet sein. Bei dieser konkreten Ausgestaltung ergibt sich eine Anordnung, bei der zwischen dem dritten Beschlag und dem ersten Beschlag ein Abstand von 60% der gesamten Wegstrecke zwischen erstem Beschlag und zweiten Beschlag und zwischen drittem Beschlag und zweitem Beschlag ein Abstand von 40% der Wegstrecke zwischen erstem Beschlag und zweitem Beschlag vorgesehen ist. Eine solche Aufteilung ist beispielsweise denkbar und vorteilhaft bei einer Rücksitzbank, bei der ein Lukenabschnitt des Rückenlehnenteils als Ladeluke separat vorverschwenkt werden kann, wobei der zusätzliche, dritte Beschlag zur besonderen Abstützung des übrigen Lehnenabschnitts des Rückenlehnenteils vorgesehen und an der Schnittstelle zwischen dem Lukenabschnitt und dem Lehnenabschnitt angeordnet sein kann.

Ist ein weiterer, zusätzlicher, vierter Beschlag vorgesehen, so ist dieser wie der dritte Beschlag zwischen dem ersten Beschlag und dem zweiten Beschlag angeordnet und zu dem ersten Beschlag, dem zweiten Beschlag und dem dritten Beschlag entlang der Schwenkachse beabstandet. Die Anordnung kann dabei so gewählt sein, dass der erste Beschlag und der zweite Beschlag jeweils um das 0,2 bis 0,45-fache der Wegstrecke von dem entlang der Schwenkachse nächsten Beschlag beabstandet sind. Es ergibt sich eine Anordnung, bei der zwischen den äußeren beiden Beschlägen zwei weitere Beschläge angeordnet sind, wobei zwischen den äußeren Beschlägen und dem jeweils nächst gelegenen inneren Beschlag ein Abstand von dem 0,2- bis 0,45-fachen des gesamten Abstands der beiden äußeren Beschläge voneinander vorgesehen ist.

Beispielsweise können die Abstände der Beschläge jeweils das 0,33-fache der Wegstrecke betragen, so dass sich eine Gleichverteilung der Beschläge entlang der Schwenkachse ergibt. Denkbar ist aber auch, dass der erste Beschlag und der zweite Beschlag jeweils um das 0,4-fache der Wegstrecke von dem entlang der Schwenkachse nächsten Beschlag beabstandet sind, so dass die beiden äußeren Beschläge jeweils um das 0,4-fache der Wegstrecke von dem nächst gelegenen inneren Beschlag beabstandet sind und die beiden inneren Beschläge einen Abstand von dem 0,2-fachen der Wegstrecke zueinander aufweisen.

Die Beschläge können jeweils in funktionsgleicher Weise als Drehbeschläge ausgebildet sein, wobei in diesem Fall die Beschläge mit einer sich entlang der Schwenkachse erstreckenden Welle zur Betätigung der Beschläge verbunden sein können. Um das Rückenlehnenteil in elektromotorischer Weise relativ zu dem Sitzteil zu verschwenken, kann dann eine elektrische Betätigungsvorrichtung in Form eines Elektromotors vorgesehen sein, die zum Antreiben mit der Welle in Wirkverbindung steht und zum Verschwenken des Rückenlehnenteils relativ zum Sitzteil die Welle verdreht und darüber die Drehbeschläge betätigt.

In anderer Ausgestaltung ist auch denkbar, die Beschläge jeweils als Rastbeschläge auszubilden, die ebenfalls über eine Welle miteinander verbunden sind und über die Welle betätigt werden können, wobei beim Betätigen der Welle - beispielsweise manuell über einen Bowdenzug oder über ein mit einem Handhebel gekoppeltes Gestänge oder elektromotorisch über eine elektrische Betätigungsvorrichtung - die Rastbeschläge entriegelt werden und so das Rückenlehnenteil frei relativ zum Sitzteil verschwenkt werden kann.

In wiederum anderer Ausgestaltung ist es auch möglich, den ersten Beschlag und den zweiten Beschlag als Drehbeschlag und den dritten Beschlag und gegebenenfalls auch weitere vorgesehene Beschläge, die zwischen dem ersten Beschlag und dem zweiten Beschlag angeordnet sind, als Rastbeschlag auszubilden. Der erste Beschlag und der zweite Beschlag können in diesem Fall jeweils mit einer sich entlang der Schwenkachse erstreckenden Welle zur Betätigung der Beschläge verbunden sein, wobei die Welle nicht mit dem dritten Beschlag und den gegebenenfalls weiteren Beschlägen verbunden ist. Zur Betätigung des dritten Beschlags und der gegebenenfalls weiter vorgesehenen Beschläge ist vielmehr ein Bowdenzug oder ein Gestänge zum Entriegeln der (Rast-) Beschläge vorgesehen.

Zum Verschwenken des Rückenlehnenteils werden in diesem Fall einerseits über den Bowdenzug oder das Gestänge die zwischen dem ersten Beschlag und dem zweiten Beschlag vorgesehenen zusätzlichen Beschläge, die als Rastbeschläge ausgebildet sind, entriegelt, und der erste Beschlag und der zweite Beschlag, die als Drehbeschläge ausgebildet sind, werden über die Welle betätigt und angetrieben, so dass das Rückenlehnenteil über den ersten Beschlag und den zweiten Beschlag um die Schwenkachse verschwenkt wird.

Das Verschwenken erfolgt damit über den ersten Beschlag und den zweiten Beschlag. Die zwischen dem ersten Beschlag und dem zweiten Beschlag angeordneten, zusätzlichen Beschläge dienen allein zur Abstützung beispielsweise bei aufgerichteter Rückenlehne in verriegeltem Zustand.

Die Betätigung des ersten und zweiten Beschlags (in Form von Drehbeschlägen) und der dazwischen angeordneten, weiteren Beschläge (in Form von Rastbeschlägen) erfolgt in gesteuerter, aufeinander abgestimmter, synchronisierter Weise, wobei beispielsweise eine Synchronisation mechanisch in der Weise erfolgen kann, dass bei Betätigung des ersten und zweiten Beschlags über die Welle automatisch beispielsweise über einen Bowdenzug oder ein Gestänge die dazwischen liegenden Beschläge (in Form von Rastbeschlägen) entriegelt werden.

Es kann vorgesehen sein, die Beschläge baugleich auszubilden, also Beschläge des gleichen Funktionsprinzips (Rast- oder Drehbeschläge) mit identischen Bauteilen zu verwenden, so dass sich eine einfache Herstellung der Beschläge mit gleichen Teilen nach dem Gleichteileprinzip ergibt. Die einzelnen Beschläge können dabei gegebenenfalls kleiner dimensioniert werden als bei herkömmlichen Anordnungen, bei denen lediglich zwei Beschläge zur Verbindung eines Rückenlehnenteils mit einem Sitzteil vorgesehen sind, indem die Abstützung des Rückenlehnenteils relativ zum Sitzteil auf mehr als zwei Beschläge verteilt wird.

Denkbar ist in anderer Ausgestaltung auch, die beiden äußeren Beschläge, also den ersten Beschlag und den zweiten Beschlag, baugleich auszugestalten, die zwischen dem ersten Beschlag und dem zweiten Beschlag angeordneten weiteren Beschläge hingegen kleiner zu dimensionieren, so dass die weiteren Beschläge zur Abstützung geringerer Kräfte ausgebildet sind.

In umgekehrter Ausgestaltung ist ebenso denkbar, die äußeren beiden Beschläge, also den ersten und den zweiten Beschlag, jeweils kleiner als die weiteren Beschläge zu dimensionieren.

In beiden Fällen können die verwendeten Beschläge dasselbe Funktionsprinzip verwenden, also als Rastbeschläge oder Drehbeschläge ausgebildet sein, wobei auch denkbar ist, die unterschiedlichen Beschläge nach unterschiedlichen Funktionsprinzipien auszugestalten, also einerseits Rastbeschläge und andererseits Drehbeschläge einzusetzen, wie dies oben beschrieben worden ist.

Der der Erfindung zugrundeliegende Gedanke soll nachfolgend anhand der in den Figuren dargestellten Ausführungsbeispiele näher erläutert werden. Es zeigen:
- Fig. 1: eine perspektivische Ansicht eines Fahrzeugsitzes in Form einer Rücksitzbank mit drei Beschlägen zur schwenkbaren Verbindung eines Rückenlehnenteils mit einem Sitzteil;
- Fig. 2: eine schematische Ansicht von vier Beschlägen zum schwenkbaren Verbinden eines Rückenlehnenteils mit einem Sitzteil und
- Fig. 3: eine schematische Ansicht von vier Beschlägen, mit anderen Abständen im Vergleich zu Fig. 2, zum schwenkbaren Verbinden eines Rückenlehnenteils mit einem Sitzteil.

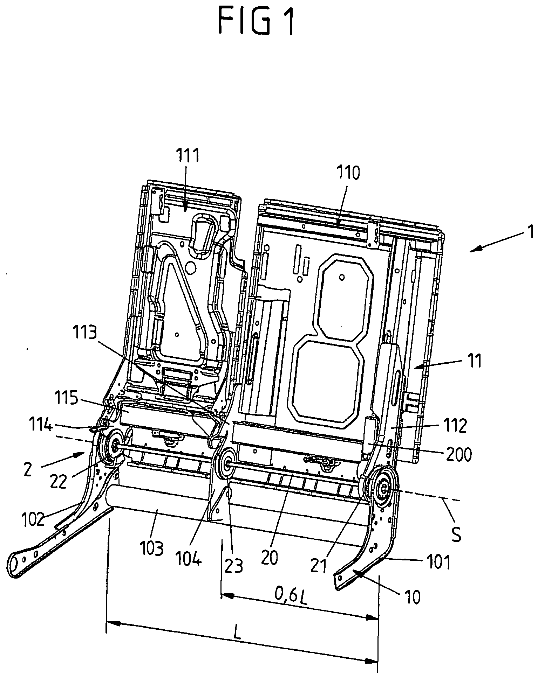

Bei einem in Fig. 1 perspektivisch dargestellten Fahrzeugsitz 1 in Form einer Rücksitzbank ist ein Rückenlehnenteil 11, bestehend aus einem Lehnenabschnitt 110 und einem separat von diesem Lehnenabschnitt 110 verschwenkbaren Lukenabschnitt 111 zur Ausbildung einer Ladeluke, mit einem Sitzteil 10 um eine Schwenkachse S schwenkbar gekoppelt.

In Fig. 1 sind vom Sitzteil 10 nur Rahmenteile 101, 102 dargestellt, die mit einem Fahrzeugboden in fester Weise verbunden, aber auch über sich in Längsrichtung eines Fahrzeugs erstreckende Führungsschienen längsverschieblich sein können.

Das Rückenlehnenteil 11 ist über einen ersten Beschlag 21 und einen zweiten Beschlag 22 in verschwenkbarer Weise mit dem Sitzteil 10 gekoppelt, wobei der erste Beschlag 21 mit einem ersten Rahmenteil 101 des Sitzteils 10 und einem ersten Rahmenteil 112 des Rückenlehnenteils 11 und der zweite Beschlag 22 mit einem zweiten Rahmenteil 102 des Sitzteils 10 und einem zweiten Rahmenteil 114 des Rückenlehnenteils 11 verbunden ist.

Die Beschläge 21, 22 sind bei dem dargestellten Ausführungsbeispiel als Drehbeschläge ausgebildet und über eine Welle 20 miteinander verbunden, wobei zum Betätigen der Beschläge 21, 22 eine Betätigungsvorrichtung 200 in Form eines Elektromotors vorgesehen ist, der zum Verschwenken des Rückenlehnenteils 11 relativ zum Sitzteil 10 die Welle 20 in eine Drehbewegung versetzt und darüber die Beschläge 21, 22 verstellt. Zur zusätzlichen Abstützung des Rückenlehnenteils 11 relativ zum Sitzteil 10 ist ein dritter Beschlag 23 vorgesehen, der ebenfalls als Drehbeschlag ausgebildet ist und mit der Welle 20 gekoppelt ist. Der dritte Beschlag 23 ist entlang der Schwenkachse S gesehen zwischen dem ersten Beschlag 21 und dem zweiten Beschlag 22 angeordnet und mit einem dritten Rahmenteil 104 in Form eines Adapterteils des Sitzteils 10 und einem dritten Rahmenteil 113 des Rückenlehnenteils 11 verbunden.

Das dritte Rahmenteil 104 des Sitzteils 10 ist an einem Querrohr 103, das sich zwischen dem Rahmenteil 101, 102 des Sitzteils 10 erstreckt, angeordnet, beispielsweise mit dem Querrohr 103 in stumpf aufgesetzter Weise verschweißt oder mit diesem verschraubt. Das dritte Rahmenteil 113 des Rückenlehnenteils 11 ist Bestandteil des Lehnenabschnitts 110 und über eine Querstrebe 115 mit dem ersten Rahmenteil 112 und dem zweiten Rahmenteil 114 des Rückenlehnenteils 11 verbunden.

Der dritte Beschlag 23 ist entlang der Schwenkachse S gesehen jeweils zu den außen angeordneten Beschlägen 21, 22 beabstandet. Der Abstand zwischen den außen gelegenen Beschlägen 21, 22 entspricht dabei einer Wegstrecke L, während der Abstand zwischen dem ersten Beschlag 21 und dem dritten Beschlag 23 dem 0,6-fachen der Wegstrecke L und entsprechend der Abstand zwischen dem zweiten Beschlag 22 und dem dritten Beschlag 23 dem 0,4-fachen der Wegstrecke L entspricht.

Durch das Vorsehen des dritten Beschlags 23 wird das Rückenlehnenteil 11 zusätzlich abgestützt und zwar an dem Ort, an dem der Lukenabschnitt 111 zur Ausbildung der Ladeluke an den Lehnenabschnitt 110 anschließt.

An dem dritten Rahmenteil 113 des Rückenlehnenteils 11 oder dem Rahmenteil 104 des Sitzteils 10 kann zusätzlich ein Gurtanbindungspunkt vorgesehen sein, so dass darüber eingeleitete Gurtkräfte über den zusätzlichen, dritten Beschlag 23 abgestützt und aufgenommen werden können.

Grundsätzlich sind auch andere Anordnungen des dritten Beschlags 23 denkbar und möglich. Beispielsweise kann der Abstand des dritten Beschlags 23 zum ersten Beschlag 21 dem 0,5-fachen der Wegstrecke L entsprechen, so dass der dritte Beschlag 23 mittig zwischen dem ersten Beschlag 21 und dem zweiten Beschlag 22 angeordnet ist.

Vorteilhafterweise wird der dritte Beschlag 23 dort angebracht, wo einerseits Kräfte abgestützt werden müssen und andererseits eine vorteilhafte Anbindung an die Rahmenstruktur des Fahrzeugsitzes 1 möglich ist.

Ist der Fahrzeugsitz 1 über Führungsschienen längs verschieblich gelagert, kann das dritte Rahmenteil 104 des Sitzteils 10 auch mit einer Führungsschiene verbunden, beispielsweise stumpf auf diese aufgeschweißt sein (und nicht wie in Fig. 1 dargestellt mit einem Querrohr 103 verbunden sein).

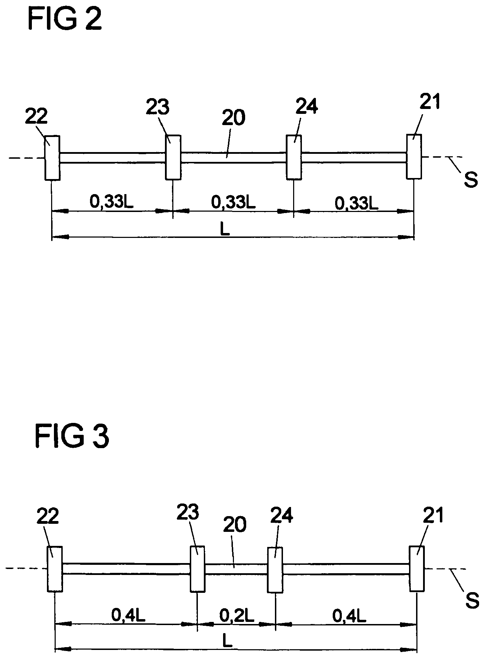

Denkbar und möglich ist auch, anstelle eines zusätzlichen, dritten Beschlags 23 mehrere zusätzliche Beschläge 23, 24 zu verwenden, wie dies schematisch in Fig. 2 und 3 dargestellt ist.

Bei der Anordnung gemäß Fig. 2 sind vier Beschläge 21, 22, 23, 24 vorgesehen, die jeweils als Drehbeschläge ausgebildet und über eine Welle 20 zur Betätigung miteinander gekoppelt sind. Der Abstand zwischen den einzelnen Beschlägen 21, 22, 23, 24 entspricht jeweils dem 0,33-fachen der Wegstrecke L zwischen den äußeren beiden Beschlägen 21, 22.

Die Anordnung gemäß Fig. 3 gleicht im Wesentlichen der Anordnung gemäß Fig. 2, mit dem Unterschied, dass der Abstand zwischen dem ersten Beschlag 21 und dem entlang der Schwenkachse S nächst gelegenen Beschlag 24 dem 0,4-fachen der Wegstrecke L entspricht, genauso wie der Abstand zwischen dem zweiten Beschlag 22 und dem nächstgelegenen Beschlag 23. Der Abstand zwischen den zusätzlichen, inneren Beschlägen 23, 24 entspricht entsprechend dem 0,2-fachen der Wegstrecke L.

Auch andere Verteilungen sind möglich und werden vorzugsweise in Abhängigkeit von der Kraftverteilung und solchen Punkten, an denen hohe Belastungskräfte auftreten können, gewählt.

Bei den dargestellten Ausführungsbeispielen sind die Beschläge 21, 22, 23, 24 als Drehbeschläge ausgebildet. Denkbar ist aber auch, die Beschläge 21, 22, 23, 24 insgesamt als Rastbeschläge, die in verrastetem Zustand das Rückenlehnenteil 11 zum Sitzteil 10 verriegeln und zum Verschwenken des Rückenlehnenteils 11 relativ zum Sitzteil 10 entriegelt werden können, auszubilden.

Denkbar ist auch, die äußeren beiden Beschläge 21, 22 als Drehbeschläge, die inneren, dazwischen gelegenen, zusätzlichen Beschläge 23, 24 hingegen als Rastbeschläge auszugestalten, wobei die äußeren Beschläge 21, 22 über die Welle 20 und die inneren Beschläge 23, 24 beispielsweise über einen separaten Bowdenzug betätigt werden (die inneren Beschläge 23, 24 sind in diesem Fall nicht mit der Welle 20 gekoppelt).

Der der Erfindung zugrundeliegende Gedanke ist nicht auf die vorangehend geschilderten Ausführungsbeispiele beschränkt, sondern lässt sich grundsätzlich auch in anderen Ausführungsformen verwirklichen. Beispielsweise kann auch eine größere Anzahl von zusätzlichen Beschläge, beispielsweise drei oder mehr zusätzliche Beschläge, eingesetzt werden, um entlang der Schwenkachse S verteilte Abstützungspunkte des Rückenlehnenteils 11 relativ zum Sitzteil 10 zu schaffen und eine möglichst gleich verteilte Krafteinleitung vom Rückenlehnenteil 11 ins Sitzteil 10 zu erreichen. Die Anordnung der Rastbeschläge kann dabei gezielt der auftretenden Belastung angepasst werden, so dass eine Abstützung insbesondere in solchen Bereichen geschaffen wird, in denen große Belastungskräfte auftreten können.

Denkbar ist in diesem Zusammenhang auch, die einzelnen Beschläge unterschiedlich zu dimensionieren, also beispielsweise die äußeren Beschläge groß zur Aufnahme von großen Kräften, die inneren Beschläge hingegen klein zur Aufnahme von geringeren Kräften auszubilden (wobei auch eine umgekehrte Dimensionierung denkbar und vorteilhaft sein kann).

### Bezugszeichenliste

- 1: Fahrzeugsitz
- 10: Sitzteil
- 101, 102: Rahmenteil
- 103: Querrohr
- 104: Adapterteil
- 11: Rückenlehnenteil
- 110: Lehnenabschnitt
- 111: Lukenabschnitt
- 112, 113, 114: Rahmenteil
- 115: Querstrebe
- 2: Verstellvorrichtung
- 20: Welle
- 200: Elektrische Betätigungsvorrichtung
- 21, 22, 23, 24: Beschlag
- S: Schwenkachse

## Patentansprüche

1. Fahrzeugsitz, mit
- einem Sitzteil,
- einem Rückenlehnenteil, das um eine Schwenkachse schwenkbar mit dem Sitzteil verbunden ist und einen Lehnenabschnitt (110) und einen separat von dem Lehnenabschnitt (110) verschwenkbaren Lukenabschnitt (111) aufweist, und
- einem ersten Beschlag, der entlang der Schwenkachse gesehen an einer ersten Position am Sitzteil angeordnet ist, und einem zweiten Beschlag, der in Richtung der Schwenkachse gesehen an einer zweiten Position am Sitzteil angeordnet ist, zur schwenkbaren Verbindung des Rückenlehnenteils mit dem Sitzteil,
- einem dritten Beschlag (23), der entlang der Schwenkachse (S) gesehen zwischen dem ersten Beschlag (21) und dem zweiten Beschlag (22) angeordnet und zu dem ersten Beschlag (21) und zu dem zweiten Beschlag (22) entlang der Schwenkachse (S) beabstandet ist und eine zusätzliche Abstützung des Rückenlehnenteils (11) relativ zum Sitzteil (10) schafft, wobei der erste Beschlag (21), der zweite Beschlag (22) und der dritte Beschlag (23) als Drehbeschlag, der durch kontinuierliches Verdrehen das Rückenlehnenteil (11) relativ zum Sitzteil (10) verschwenkt, oder als Rastbeschlag, der in einem verrasteten Zustand das Rückenlehnenteil (11) in Position relativ zum Sitzteil (10) hält und zum Verschwenken des Rückenlehnenteils (11) relativ zum Sitzteil (10) entriegelbar ist, ausgebildet sind, wobei
- der erste Beschlag (21) mit einem ersten Rahmenteil (101) des Sitzteils (10) und einem ersten Rahmenteil (112) des Rückenlehnenteils (11),
- der zweite Beschlag (22) mit einem zweiten Rahmenteil (102) des Sitzteils (10) und einem zweiten Rahmenteil (114) des Rückenlehnenteils (11) und
- der dritte Beschlag (23) mit einem dritten Rahmenteil (104) des Sitzteils (10) und einem dritten Rahmenteil (113) des Rückenlehnenteils (11), die von den Rahmenteilen (101, 102, 112, 114), mit denen der erste Beschlag (21) und der zweite Beschlag (22) verbunden sind, unterschiedlich sind,
verbunden sind, wobei das dritte Rahmenteil (113) des Rückenlehnenteils (11) Bestandteil des Lehnenabschnitts (110) ist und über eine Querstrebe (115) mit dem ersten Rahmenteil (112) und dem zweiten Rahmenteil (114) des Rückenlehnenteils (11) verbunden ist.

2. Fahrzeugsitz nach Anspruch 1, **dadurch gekennzeichnet, dass** der dritte Beschlag (23) an einer Position eines Gurtanbindungspunktes am Sitzteil (10) angeordnet ist.

3. Fahrzeugsitz nach Anspruch 1 oder 2, **dadurch gekennzeichnet, dass** der erste Beschlag (21) und der zweite Beschlag (22) um eine Wegstrecke (L) entlang der Schwenkachse (S) voneinander beabstandet sind und der dritte Beschlag (23) um das 0,2- bis 0,8-fache, bevorzugt um das 0,35- bis 0,65-fache, der Wegstrecke (L) von dem ersten Beschlag (21) beabstandet ist.

4. Fahrzeugsitz nach Anspruch 3, **dadurch gekennzeichnet, dass** der dritte Beschlag (23) um das 0,6-fache der Wegstrecke (L) von dem ersten Beschlag (21) beabstandet ist.

5. Fahrzeugsitz nach einem der vorangehenden Ansprüche, **dadurch gekennzeichnet, dass** ein vierter Beschlag (24) entlang der Schwenkachse (S) gesehen zwischen dem ersten Beschlag (21) und dem zweiten Beschlag (22) angeordnet und zu dem ersten Beschlag (21), dem zweiten Beschlag (22) und dem dritten Beschlag (23) entlang der Schwenkachse (S) beabstandet ist.

6. Fahrzeugsitz nach Anspruch 5, **dadurch gekennzeichnet, dass** der erste Beschlag (21) und der zweite Beschlag (22) um eine Wegstrecke (L) entlang der Schwenkachse (S) voneinander und jeweils um das 0,25- bis 0,45-fache der Wegstrecke (L) von dem entlang der Schwenkachse (S) nächsten Beschlag (23, 24) beabstandet sind.

7. Fahrzeugsitz nach Anspruch 6, **dadurch gekennzeichnet, dass** der erste Beschlag (21) und der zweite Beschlag (22) jeweils um das 0,33-fache der Wegstrecke (L) von dem entlang der Schwenkachse (S) nächsten Beschlag (23, 24) beabstandet sind.

8. Fahrzeugsitz nach Anspruch 6, **dadurch gekennzeichnet, dass** der erste Beschlag (21) und der zweite Beschlag (22) jeweils um das 0,4-fache der Wegstrecke (L) von dem entlang der Schwenkachse (S) nächsten Beschlag (23, 24) beabstandet sind.

9. Fahrzeugsitz nach einem der Ansprüche 1 bis 8, **dadurch gekennzeichnet, dass** die Beschläge (21, 22, 23, 24) jeweils als Drehbeschläge ausgebildet sind.

10. Fahrzeugsitz nach Anspruch 9, **dadurch gekennzeichnet, dass** die Beschläge (21, 22, 23, 24) mit einer sich entlang der Schwenkachse (S) erstreckenden Welle (20) zur Betätigung der Beschläge (21, 22, 23, 24) verbunden sind.

11. Fahrzeugsitz nach Anspruch 10, **gekennzeichnet durch** eine elektrische Betätigungsvorrichtung (200) zum Antreiben der Welle (20)

12. Fahrzeugsitz nach einem der Ansprüche 1 bis 8, **dadurch gekennzeichnet, dass** der erste Beschlag (21) und der zweite Beschlag (22) als Drehbeschlag und der dritte Beschlag (23) und gegebenenfalls weitere Beschläge (24) als Rastbeschlag ausgebildet sind.

13. Fahrzeugsitz nach Anspruch 12, **dadurch gekennzeichnet, dass** der erste Beschlag (21) und der zweite Beschlag (22) mit einer sich entlang der Schwenkachse (S) erstreckenden Welle (20) zur Betätigung der Beschläge (21, 22) und der dritte Beschlag (23) und gegebenenfalls weitere Beschläge (24) mit einem Bowdenzug oder einem Gestänge zum Entriegeln der Beschläge (23, 24) verbunden sind.

14. Fahrzeugsitz nach einem der Ansprüche 1 bis 13, **dadurch gekennzeichnet, dass** die Beschläge (21, 22, 23, 24) baugleich sind.

15. Fahrzeugsitz nach einem der Ansprüche 1 bis 13, **dadurch gekennzeichnet, dass** der erste Beschlag (21) und der zweite Beschlag (22) baugleich sind und der dritte Beschlag (23) und gegebenenfalls weitere Beschläge (24) kleiner dimensioniert sind.

16. Fahrzeugsitz nach einem der Ansprüche 1 bis 13, **dadurch gekennzeichnet, dass** der erste Beschlag (21) und der zweite Beschlag (22) baugleich sind und der dritte Beschlag (23) und gegebenenfalls weitere Beschläge (24) größer dimensioniert sind.

## Claims

1. A vehicle seat having
- a seat member,
- a backrest member which is connected to the seat member so as to be able to be pivoted about a pivot axis and which comprises a backrest portion (110) and a hatch portion (111), which can be pivoted separately from this backrest portion (110), and
- a first fitting which, when viewed along the pivot axis, is arranged at a first position on the seat member and a second fitting which, when viewed in the direction of the pivot axis, is arranged at a second position on the seat member for a pivotable connection of the backrest member with the seat member,
- a third fitting (23) which, when viewed along the pivot axis (S) is arranged between the first fitting (21) and the second fitting (22) and which is spaced apart from the first fitting (21) and the second fitting (22) along the pivot axis (S) and which provides an additionally support of the backrest member (11) relative to the seat member (10), wherein the first fitting (21), the second fitting (22) and the third fitting (23) are formed as a rotary fitting, which pivots the backrest member (11) relative to the seat member (10) by means of continuous rotation, or as a catch fitting, which in an engaged state fixes the backrest member (11) in position relative to the seat member (10) and can be unlocked in order to pivot the backrest member (11) relative to the seat member (10), wherein
- the first fitting (21) is connected to a first frame member (101) of the seat member (10) and a first frame member (112) of the backrest member (11),
- the second fitting (22) is connected to a second frame member (102) of the seat member (10) and a second frame member (114) of the backrest member (11) and
- the third fitting (23) is connected to a frame member (104) of the seat member (10) and a frame member (113) of the backrest member (11) which are different from the frame members (101, 102, 112, 114) to which the first fitting (21) and the second fitting (22) are connected
wherein the third frame member (113) of the backrest member (11) is an integral component of the backrest portion (110) and is connected to the first frame member (112) and the second frame member (114) of the backrest member (11) by means of a transverse member (115).

2. The vehicle seat as claimed in claim 1, **characterized in that** the third fitting (23) is arranged on the seat member (10) at a position of a belt connection location.

3. The vehicle seat as claimed in claim 1 or 2, **characterized in that** the first fitting (21) and the second fitting (22) are spaced apart from each other by a distance (L) along the pivot axis (S) and the third fitting (23) is spaced apart from the first fitting (21) by from 0.2 to 0.8 times the distance (L), preferably by from 0.35 to 0.65 times the distance (L).

4. The vehicle seat as claimed in claim 3, **characterized in that** the third fitting (23) is spaced apart from the first fitting (21) by 0.6 times the distance (L).

5. The vehicle seat as claimed in one of the preceding claims, **characterized in that** a fourth fitting (24), when viewed along the pivot axis (S), is arranged between the first fitting (21) and the second fitting (22), and is spaced apart from the first fitting (21), the second fitting (22) and the third fitting (23) along the pivot axis (S).

6. The vehicle seat as claimed in claim 5, **characterized in that** the first fitting (21) and the second fitting (22) are spaced apart from each other along the pivot axis (S) by a distance (L) and are each spaced apart from the next fitting (23, 24) along the pivot axis (S) by from 0.25 to 0.45 times the distance (L).

7. The vehicle seat as claimed in claim 6, **characterized in that** the first fitting (21) and the second fitting (22) are each spaced apart from the next fitting (23, 24) along the pivot axis (S) by 0.33 times the distance (L).

8. The vehicle seat as claimed in claim 6, **characterized in that** the first fitting (21) and the second fitting (22) are each spaced apart from the next fitting (23, 24) along the pivot axis (S) by 0.4 times the distance (L).

9. The vehicle seat as claimed in one of claims 1 to 8, **characterized in that** the fittings (21, 22, 23, 24) are each constructed as rotary fittings.

10. The vehicle seat as claimed in claim 9, **characterized in that** the fittings (21, 22, 23, 24) are connected to a shaft (20) which extends along the pivot axis (S) in order to actuate the fittings (21, 22, 23, 24).

11. The vehicle seat as claimed in claim 10, **characterized by** an electrical actuation device (200) for driving the shaft (20).

12. The vehicle seat as claimed in one of claims 1 to 8, **characterized in that** the first fitting (21) and the second fitting (22) are constructed as rotary fittings and the third fitting (23) and optionally additional fittings (24) are constructed as catch fittings.

13. The vehicle seat as claimed in claim 12, **characterized in that** the first fitting (21) and the second fitting (22) are connected to a shaft (20) which extends along the pivot axis (S) in order to actuate the fittings (21, 22) and the third fitting (23) and optionally additional fittings (24) are connected to a Bowden cable or a rod assembly in order to unlock the fittings (23, 24).

14. The vehicle seat as claimed in one of claims 1 to 13, **characterized in that** the fittings (21, 22, 23, 24) are structurally identical.

15. The vehicle seat as claimed in one of claims 1 to 13, **characterized in that** the first fitting (21) and the second fitting (22) are structurally identical and the third fitting (23) and optionally additional fittings (24) have smaller dimensions.

16. The vehicle seat as claimed in one of claims 1 to 13, **characterized in that** the first fitting (21) and the second fitting (22) are structurally identical and the third fitting (23) and optionally additional fittings (24) have larger dimensions.

## Revendications

1. Siège de véhicule, avec
- une partie siège,
- une partie dossier, qui est reliée à la partie siège de manière à pouvoir pivoter autour d'un axe de pivotement et qui présente une section dossier (110) et une section cale (111) pouvant pivoter de manière séparée de la partie dossier (110), et
- une première ferrure, qui est disposée, vue le long de l'axe de pivotement, au niveau d'une première position au niveau de la partie siège, et une deuxième ferrure, qui est disposée, vue dans la direction de l'axe de pivotement, au niveau d'une deuxième position au niveau de la partie siège, servant à relier de manière à pouvoir pivoter la partie dossier à la partie siège,
- une troisième ferrure (23), qui est disposée, vue le long de l'axe de pivotement (S), entre la première ferrure (21) et la deuxième ferrure (22) et qui est espacée le long de l'axe de pivotement (S) par rapport à la première ferrure (21) et par rapport à la deuxième ferrure (22) et crée un soutien supplémentaire de la partie dossier (11) par rapport à la partie siège (10), dans lequel la première ferrure (21), la deuxième ferrure (22) et la troisième ferrure (23) sont réalisées sous la forme d'une ferrure rotative, qui pivote par rapport à la partie siège (10) par la rotation continue de la partie dossier (11), ou sous la forme d'une ferrure d'enclenchement, qui maintient, dans un état enclenché, la partie dossier (11) en position par rapport à la partie siège (10) et qui peut être déverrouillée afin de faire pivoter la partie dossier (11) par rapport à la partie siège (10),
dans lequel
- la première ferrure (21) est reliée à une première partie de cadre (101) de la partie siège (10) et à une première partie de cadre (112) de la partie dossier (11),
- la deuxième ferrure (22) est reliée à une deuxième partie de cadre (102) de la partie siège (10) et à une deuxième partie de cadre (114) de la partie dossier (11), et
- la troisième ferrure (23) est reliée à une troisième partie de cadre (104) de la partie siège (10) et à une troisième partie de cadre (113) de la partie dossier (11), qui sont différentes des parties de cadre (101, 102, 112, 114), auxquelles la première ferrure (21) et la deuxième ferrure (22) sont reliées, dans lequel la troisième partie de cadre (113) de la partie dossier (11) fait partie intégrante de la section de dossier (110) et est reliée, par l'intermédiaire d'une entretoise transversale (115), à la première partie de cadre (112) et à la deuxième partie de cadre (114) de la partie dossier (11).

2. Siège de véhicule selon la revendication 1, **caractérisé en ce que** la troisième ferrure (23) est disposée au niveau de la partie siège (10) au niveau d'une position d'un point d'accrochage de ceinture.

3. Siège de véhicule selon la revendication 1 ou 2, **caractérisé en ce que** la première ferrure (21) et la deuxième ferrure (22) sont espacées l'une de l'autre le long de l'axe de pivotement (S) d'une distance de parcours (L), et la troisième ferrure (23) est espacée de la première ferrure (21) de 0,2 à 0,8 fois, de manière préférée de 0,35 à 0,65 fois, la distance de parcours (L).

4. Siège de véhicule selon la revendication 3, **caractérisé en ce que** la troisième ferrure (23) est espacée de la première ferrure (21) de 0,6 fois la distance de parcours (L).

5. Siège de véhicule selon l'une quelconque des revendications précédentes, **caractérisé en ce qu'**une quatrième ferrure (24) est disposée, vue le long de l'axe de pivotement (S), entre la première ferrure (21) et la deuxième ferrure (22) et est espacée le long de l'axe de pivotement (S) par rapport à la première ferrure (21), à la deuxième ferrure (22) et à la troisième ferrure (23).

6. Siège de véhicule selon la revendication 5, **caractérisé en ce que** la première ferrure (21) et la deuxième ferrure (22) sont espacées l'une de l'autre le long de l'axe de pivotement (S) d'une distance de parcours (L) et sont espacées de la prochaine ferrure (23, 24) le long de l'axe de pivotement (S) respectivement de 0,25 à 0,45 fois la distance de parcours (L).

7. Siège de véhicule selon la revendication 6, **caractérisé en ce que** la première ferrure (21) et la deuxième ferrure (22) sont espacées de la prochaine ferrure (23, 24) le long de l'axe de pivotement (S) respectivement de 0,33 fois la distance de parcours (L).

8. Siège de véhicule selon la revendication 6, **caractérisé en ce que** la première ferrure (21) et la deuxième ferrure (22) sont espacées de la prochaine ferrure (23, 24) le long de l'axe de pivotement (S) respectivement de 0,4 fois de la distance de parcours (L).

9. Siège de véhicule selon l'une quelconque des revendications 1 à 8, **caractérisé en ce que** les ferrures (21, 22, 23, 24) sont réalisées respectivement sous la forme de ferrures rotatives.

10. Siège de véhicule selon la revendication 9, **caractérisé en ce que** les ferrures (21, 22, 23, 24) sont reliées à un arbre (20) s'étendant le long de l'axe de pivotement (S) servant à l'actionnement des ferrures (21, 22, 23, 24).

11. Siège de véhicule selon la revendication 10, **caractérisé par** un dispositif d'actionnement (200) électrique servant à entraîner l'arbre (20).

12. Siège de véhicule selon l'une quelconque des revendications 1 à 8, **caractérisé en ce que** la première ferrure (21) et la deuxième ferrure (22) sont réalisées sous la forme d'une ferrure rotative, et la troisième ferrure (23) et éventuellement d'autres ferrures (24) sont réalisées sous la forme d'une ferrure d'enclenchement.

13. Siège de véhicule selon la revendication 12, **caractérisé en ce que** la première ferrure (21) et la deuxième ferrure (22) sont reliées à un arbre (20) s'étendant le long de l'axe de pivotement (S) servant à l'actionnement des ferrures (21, 22), et la troisième ferrure (23) et éventuellement d'autres ferrures (24) sont reliées à un câble Bowden ou à une tringle servant à déverrouiller les ferrures (23, 24).

14. Siège de véhicule selon l'une quelconque des revendications 1 à 13, **caractérisé en ce que** les ferrures (21, 22, 23, 24) sont de structure identique.

15. Siège de véhicule selon l'une quelconque des revendications 1 à 13, **caractérisé en ce que** la première ferrure (21) et la deuxième ferrure (22) sont de structure identique, et la troisième ferrure (23) et éventuellement d'autres ferrures (24) présentent des dimensions plus petites.

16. Siège de véhicule selon l'une quelconque des revendications 1 à 13, **caractérisé en ce que** la première ferrure (21) et la deuxième ferrure (22) sont de structure identique, et la troisième ferrure (23) et éventuellement d'autres ferrures (24) présentent des dimensions plus grandes.
